# EUROPÄISCHE PATENTSCHRIFT

(11) **EP 1 194 668 B1**
(45) Veröffentlichungstag und Bekanntmachung des Hinweises auf die Patenterteilung: **19.01.2005**
(21) Anmeldenummer: 00945554.4
(22) Anmeldetag: 22.05.2000
(51) Int. Cl.: E05B 49/00

(54) **VERFAHREN UND ANORDNUNG ZUR FERN-ZUGANGSSTEUERUNG**
METHOD AND ARRANGEMENT FOR REMOTE ACCESS CONTROL
PROCEDE ET DISPOSITIF POUR LA COMMANDE D'ACCES A DISTANCE

(30) Priorität: 25.05.1999 DE 19923983
(43) Veröffentlichungstag der Anmeldung: 10.04.2002
(73) Patentinhaber: SIEMENS AKTIENGESELLSCHAFT, 80333 München (DE)
(72) Erfinder: SCHNEIDER, Christian, D-93138 Lappersdorf (DE); REISINGER, Thomas, D-93051 Regensburg (DE)
(86) Internationale Anmeldenummer: PCT/DE2000/001639
(87) Internationale Veröffentlichungsnummer: WO 2000/071843

(56) Entgegenhaltungen:
- EP-A- 0 343 619
- EP-A- 0 802 497
- DE-A- 19 825 821

## Beschreibung

Die Erfindung betrifft ein Verfahren zur Fern-Zugangssteuerung nach dem Oberbegriff des Anspruchs 1 sowie eine Anordnung zur Durchführung dieses Verfahrens.

Elektronische Zugangssteuersysteme haben in den letzten Jahren in verschiedenen Bereichen eine überraschend schnelle und weite Verbreitung gefunden. Die Funktionalität solcher Systeme wird ständig weiter ausgebaut. So haben sich im Automobilbau die klassischen Funkschließsysteme, die anfangs nur die Bedeutung einer (von vielen Autofahrern als überflüssig erachteten) Komfortfunktion hatten, inzwischen zu komplexen Systemen gewandelt, über die nicht nur der Zugang zum Fahrzeuginnenraum erreicht wird, sondern über die zudem Fahrzeugfunktionen gesteuert werden. Die Benutzerauthentifikation erfolgt dabei durch die Übermittlung eines Zugangscodes, und zwar bei modernen Systemen per Funk. Perspektivisch ist auch vorgesehen, neben dem Zugangscode benutzerspezifische Daten zu übertragen, die für die Steuerung bestimmter Funktionen benötigt werden.

Fortgeschrittene Zugangssteuersysteme dieser Art, die inzwischen in PKW der Oberklasse in der Praxis eingesetzt werden, realisieren das Prinzip "Passive Entry" in Anordnungen mit einer Sender-/Empfänger-Einheit im Fahrzeug und einer Mehrzahl von Chipkarten, die den Besitzer des Fahrzeugs, dessen Ehefrau oder andere Personen zum Zugang und zur Inbetriebnahme des Fahrzeugs befähigen. Diese Chipkarten sind nicht untereinander identisch, sondern individualisiert. Das liegt unter anderem darin begründet, daß bestimmte Fahrzeugfunktionen (beispielsweise Sitz- und Spiegelverstellung) aufgrund von auf der Chipkarte gespeicherten nutzerspezifischen Daten ausgeführt werden sollen. Zudem spielen Sicherheits- und Dokumentationserwägungen hierbei eine Rolle.

Die erwähnten Chipkarten realisieren speziell das Prinzip des "Passive Entry" bzw. "Passive Go", dessen Kern darin besteht, daß die Zugangscodegeber (Chipkarten) bei Annäherung an das Fahrzeug von einer darin befindlichen Sender-/Empfänger-Einheit aktiviert bzw. abgefragt werden und daraufhin einen Zugangscode an diese aussenden. Um das Fahrzeug benutzen zu können, ist ein Mitführen der Chipkarte am Körper ausreichend. Für den Fahrzeugzutritt findet eine bidirektionale Kommunikation zwischen Fahrzeug und Chipkarte statt. Beispielsweise kommuniziert die Sender-/Empfänger-Einheit im Fahrzeug mit der Chipkarte über induktive Antennen, die in den Türen und dem Kofferraum bzw. Stoßfänger untergebracht sind. Diese Antennen werden auf einem 125 kHz-Träger angesteuert, während die Chipkarten ihre Antwort an das Fahrzeug (nach derzeitigem Stand der Technik) im sogenannten ISM-Frequenzbereich bei 433 MHz absetzen. Eine Berührung des Türgriffs bei einem gesicherten Fahrzeug bewirkt die Ausgabe eines Abfragesignals über die in der entsprechenden Tür angeordnete induktive Antenne, woraufhin die am Körper mitgeführte Chipkarte ein Zugangscodesignal (Authentifikationssignal) über Funk an das Fahrzeug sendet. Ergibt sich im Ergebnis der Auswertung des Zugangscodes dessen Gültigkeit, so wird das Fahrzeug über die Zentralverriegelungspumpe entsichert. In ähnlicher Weise läuft der Vorgang der Sicherung des Fahrzeugs beim Aussteigen, das Starten des Fahrzeugs (über einen Tiptaster im Bedienungsbereich initiiert) und die Ausführung weiterer Funktionen ab.

Ein bekanntes passive keyless entry System (EP 0 343 619 A2) weist einen tragbaren Sender, der codierte HF-Signale aussendet. Innerhalb eines Empfangsbereichs wird der Sender automatisch erkannt und ein Kraftfahrzeug automatisch ver- oder entriegelt. Um Energie des Senders zu sparen findet die Übertragung bei einer festen Trägerfrequenz unterhalb des AM-Funkbandes statt. Zur Modulation wird ein Verfahren (phase shift keying) verwendet, das nur eine sehr geringe Bandbreite ausnutzt.

Aus DE 198 25 821 A1 ist ebenfalls ein Fernzugangssteuerungssystem bekannt, das einen tragbaren Sender mit einem Verriegelungsschalter aufweist. Bei Betätigung des Schalters wird ein Kraftfahrzeug angewiesen zu verriegeln. Solange jedoch der Sender noch in der Nähe bleibt, wird das Kraftfahrzeug nicht entriegelt, sondern erst wieder, wenn sich der Sender dem Kraftfahrzeug nähert. Die Signalübertragung findet hier bei zwei festen Trägerfrequenzen statt, und zwar bei 400 MHz bzw. 2,45 GHz.

Bei einem bekannten Mautgebührenzahlsystem (EP 0 802 497 A1) wird ein Signal von einer Mautstelle als Spreizsignal ausgesendet. Ein Empfänger auf einer Karte verarbeitet das Signal und sendet eine Antwort bei einer festen Trägerfrequenz zurück, durch das ein Identifikationscode und die entsprechende Mautstelle erfaßt werden.

Zumindest beim ersten Abfragevorgang, in dessen Ergebnis der Zugang zum Fahrzeug gewährt oder verweigert wird, muß die fahrzeugseitige Sender-/Empfänger-Einheit grundsätzlich sämtliche für das Fahrzeug zugelassenen Chipkarten ansprechen, um festzustellen, ob mit einer von diesen - und mit welcher - der Zugang zum Fahrzeug begehrt wird. Diese Abfragen und/oder die Antworten erfolgen nach dem Stand der Technik sequentiell: Entweder werden die Zugangscodegeber (auch als "ID-Geber" bezeichnet) sequentiell aktiviert und abgefragt, oder die ID-Geber antworten auf ein gemeinsames "Wecksignal" sequentiell in ihnen zugewiesenen Zeitschlitzen.

Für den gesamten Ansprechvorgang und die Auswertung der eingehenden Antwort bzw. Antworten bis hin zur Aktivierung des Öffnungsmechanismus steht gemäß den Spezifikationen der Fahrzeughersteller nur eine geringe Zeitspanne (typisch 200 ms) zur Verfügung, da der Nutzer nicht wahrnehmen soll, daß zwischen der Basisstation im Fahrzeug und seiner Chipkarte ein umfangreicherer Datenaustausch stattfindet, und da ihm keine spürbare Wartezeit für die Gewährung des Zugangs zugemutet werden soll. Speziell mit zunehmendem Umfang der seitens der Zugangscode- bzw. ID-Geber zu übermittelnden Informationen wird die Summation der Antwortzeiten zunehmend kritisch für die Einhaltung dieses Zeitlimits.

Der Erfindung liegt daher die Aufgabe zugrunde, ein Verfahren zur Fern-Zugangssteuerung der gattungsgemäßen Art sowie eine Anordnung zur Durchführung dieses Verfahrens anzugeben, mit denen der Verfahrensablauf ohne wesentliche Erhöhung des technischen Aufwandes und der Kosten deutlich beschleunigt werden kann.

Diese Aufgabe wird hinsichtlich ihres Verfahrensaspektes durch ein Verfahren mit den Merkmalen des Anspruchs 1 und hinsichtlich ihres Anordnungsaspektes durch eine Anordnung mit den Merkmalen des Anspruchs 5 gelöst.

Die Erfindung schließt den wesentlichen Gedanken ein, beide Phasen des Kommunikationsvorganges zwischen der Fahrzeugeinheit und den potentiell anzusprechenden Zugangscodegebern parallel ablaufen zu lassen, indem die Zugangscodegeber durch ein gemeinsames Abfragesignal angesprochen werden und zeitlich parallel antworten, wobei ihren Sendesignalen ein Charakteristikum aufgeprägt wird, welches die zeitlich parallele Verarbeitung in der Fahrzeugeinheit ermöglicht.

In einer bevorzugten Ausführung besteht dieses Charakteristikum in einer spezifischen Spreizspektrum-Sequenz, mit der der Zugangscode die Daten im ID-Geber (der Chipkarte) verarbeitet wird/werden. Auf seiten der Fahrzeugeinheit sind entsprechende Mittel zur Entspreizung des empfangenen gespreizten Daten- bzw. Zugangscodesignals vorgesehen. Da für die einzelnen Zugangscodegeber unterschiedliche Spreizsequenzen zur Aufprägung auf den Zugangscode vorzusehen sind, müssen fahrzeugseitig sämtliche zugelassenen Spreizsequenzen vorhanden sein. Damit wird es erforderlich, mindestens Teile der fahrzeugseitigen Empfängereinheit als zueinander parallele Komponenten auszuführen. Da es sich bei den in Rede stehenden Systemen aber nicht um niedrigpreisige Systeme handelt und der potentiell erzielbare Gebrauchswertvorteil im Vordergrund steht, ist dieser Aufwand grundsätzlich vertretbar - zumal er durch geeignete Wahl des Spreizcodierungsverfahrens gering gehalten werden kann.

Unter diesem Blickwinkel ist das DSSS(Direct Sequence Spread Spectrum)-Verfahren besonders geeignet, da hierbei nur ein HF-Empfangsteil (Front-End) benötigt wird und der Mehraufwand für die verschiedenen Empfangsstrecken sich auf das Basisband, d.h. den Bereich der digitalen Signalverarbeitung, beschränkt, wo er durch Einsatz spezifischer höchstintegrierter Schaltungen minimiert werden kann. Auch senderseitig können bei den verschiedenen ID-Gebern identische HF-Baugruppen verwendet werden, lediglich bei der Erzeugung des gespreizten Datensignals im Basisband (softwaremäßig realisierbar) werden unterschiedliche Spreizsequenzen verwendet.

Grundsätzlich kann aber auch die Anwendung anderer Spreizspektrum-Verfahren sinnvoll sein, beispielsweise die Anwendung des sogenannten "Chirp"-Verfahrens, bei dem im Verlauf eines Datenttelegramms eine Erhöhung bzw. eine Absenkung der Trägerfrequenz erfolgt, die im Empfänger durch eine Empfangssignalverarbeitung mittels zeitvarianter Filter (Oberflächenwellenfilter) berücksichtigt wird. Da hierfür multiple Filterstrukturen im HF-Bereich benötigt werden, ist der empfängerseitige Aufwand grundsätzlich etwas höher - auch hier wirken sich aber technologische Fortschritte speziell bei der Herstellung von Oberflächenwellenfiltern auf Keramiksubstraten kostendämpfend aus. Ebenso läßt sich das Verfahren mittels Frequency Hopping Spread Spektrum-Verfahren bewerkstelligen. Hier steht eine große Anzahl möglicher Übertragungskanäle auf verschiedenen Frequenzen zur Verfügung, die senderseitig - wieder unter Maßgabe einer Spreizsequenz - angesprungen werden. Mittels Korrelation lassen sich im Empfänger wieder die Signale verschiedener Sender trennen.

Eine Anordnung zur Durchführung des vorgeschlagenen Verfahrens umfaßt - wie sich grundsätzlich schon aus den obigen Erläuterungen ergibt - eine Mehrzahl von Zugangscodegebern, die neben einem Speicher für den eigentlichen Zugangscode einen weiteren Speicher für das zusätzliche Charakteristikum, beispielsweise einen für jeden einzelnen Zugangscodegeber spezifischen Spreizcode, und eine zu dessen Aufprägung dienende Multiplikator- bzw. Modulatorstufe aufweisen, sowie eine Sender-/Empfänger-Einheit (Fahrzeugeinheit) zur Abfrage der einzelnen Zugangscodegeber und zur Auswertung eines oder mehrerer auf das Abfragesignal hin übermittelter, geberspezifisch individualisierter Zugangscodesignale. Die Fahrzeugeinheit weist eine der Anzahl der zugelassenen Zugangscodegeber entsprechende Anzahl von Speicherbereichen für deren Charakteristika (Spreizcodes) sowie eine entsprechende Anzahl von Filter- oder Korrelatorkomponenten zur Verarbeitung der Empfangssignale mit den gespeicherten Charakteristika auf. Es versteht sich, daß die Fahrzeugeinheit zudem einen Abfragesignalgenerator und -sender aufweist und daß die Zugangscodegeber einen auf diesen abgestimmten Abfragesignalempfänger haben, der die übrigen Komponenten der Zugangscodegeber bei Empfang eines Abfragesignals aktiviert.

Vorteile und Zweckmäßigkeiten der Erfindung ergeben sich im übrigen aus den Unteransprüchen sowie der nachfolgenden Beschreibung eines Ausführungsbeispiels sowie grundsätzlicher Zusammenhänge zum Verständnis der vorgeschlagenen Lösung anhand der Figuren. Von diesen zeigen:
- Fig. 1: ein Funktions-Blockschaltbild einer Gesamtanordnung gemäß einer Ausführungsform der Erfindung,
- Fig. 2: eine zusammenhängende Darstellung zur Erläuterung der Erzeugung eines gespreizten Datensignals sowie der Modulation des Trägers mit diesem in einem Zugangscodegeber gemäß einer Ausführungsform der Erfindung,
- Fig. 3: ein Funktions-Blockschaltbild zur Erläuterung der empfängerseitigen Verarbeitung des gemäß Fig. 2 senderseitig erzeugten Zugangscodesignals,
- Fig. 4: eine Darstellung zur Erläuterung des Prinzips der Spreizsequenzverarbeitung und
- Fig. 5: eine gegenüber Fig. 1 für die Anwendung eines speziellen Algorithmus modifizierte Anordnung.

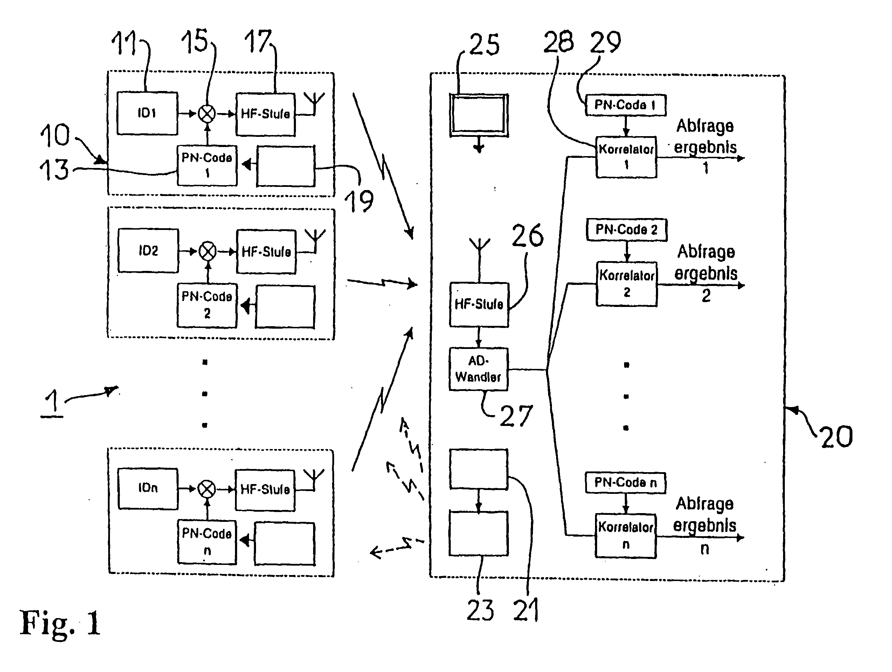

Fig. 1 zeigt eine "Passive Entry"-Zugangssteueranordnung 1, die mehrere ID-Geber 10 und eine Fahrzeugeinheit 20 umfaßt, in Form eines fragmentarischen Funktions-Blockschaltbildes, das nur die im Zusammenhang mit der Ausführung der Erfindung wesentlichen Funktionskomponenten zeigt.

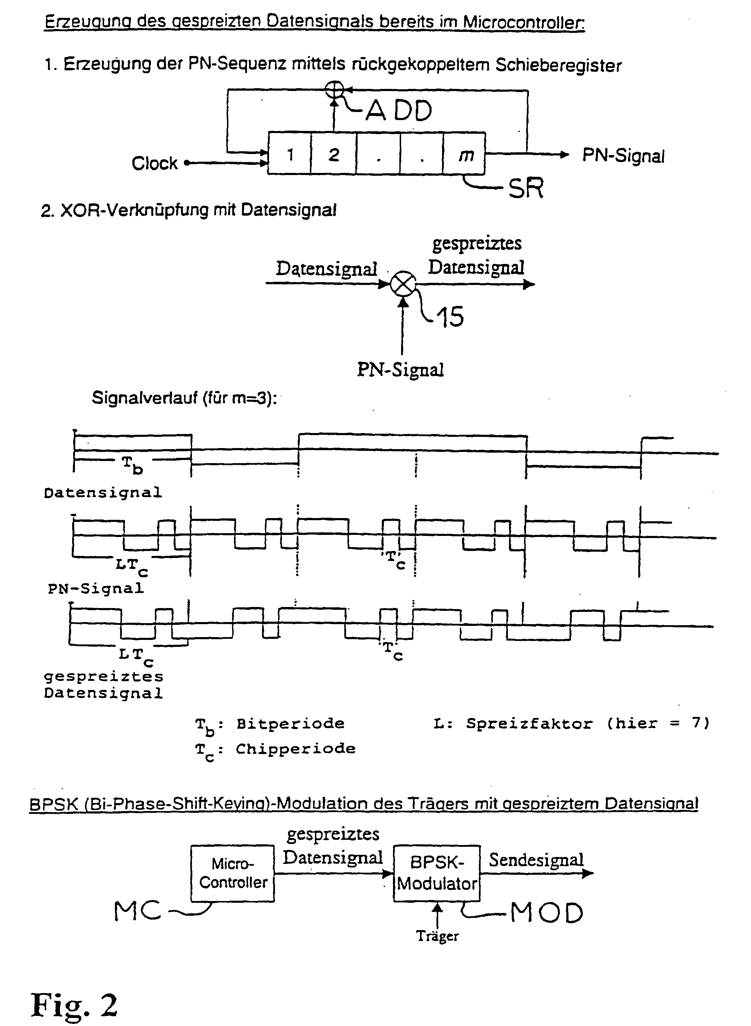

Jeder ID-Geber 10 umfaßt einen Datenspeicher 11, in dem ein geberspezifischer Code ID1, ID2, ... IDn gespeichert ist, welcher neben dem eigentlichen Zugangscode nutzerspezifische Daten des Besitzers umfaßt. Weiterhin umfaßt jeder ID-Geber einen PN-Codespeicher 13, in dem jeweils ein für diesen Geber charakteristischer Spreizcode gespeichert ist. In einer in der Figur als Multiplikator symbolisierten Spreizcode-Verarbeitungsstufe 15 jedes ID-Gebers 10 wird dem jeweiligen Zugangs- und Nutzercode der für diesen ID-Geber spezifizierte Spreizcode aufgeprägt, und in einer der Spreizcode-Verarbeitungsstufe 15 nachgeordneten HF-Stufe 17 erfolgt in an sich bekannter Weise eine HF-Verarbeitung zu einem Sendesignal, welches über eine (nicht bezeichnete) HF-Antenne abgestrahlt wird. Weiterhin weist jeder ID-Geber 10 einen Abfragesignalempfänger 19 auf, der bei Empfang eines Abfragesignals die oben genannten Komponenten zur Ausgabe eines Antwortsignals aktiviert. Die hier gewählte vereinfachte Blockdarstellung ist so zu verstehen, daß der Abfragesignalempfänger 19 einen Controller zur Ablaufsteuerung der Ausgabe eines Antwortsignals umfaßt; Details der Funktionskomplexe Abfragesignalempfang und Antwortsignalsteuerung sind an sich bekannt und bedürfen daher hier keiner genaueren Erläuterung. Der im Zusammenhang mit der Ausführung der Erfindung wesentliche Ablauf der Signalverarbeitung im ID-Geber 10 ist in Fig. 2 und der zugehörigen Beschreibung weiter unten genauer erläutert.

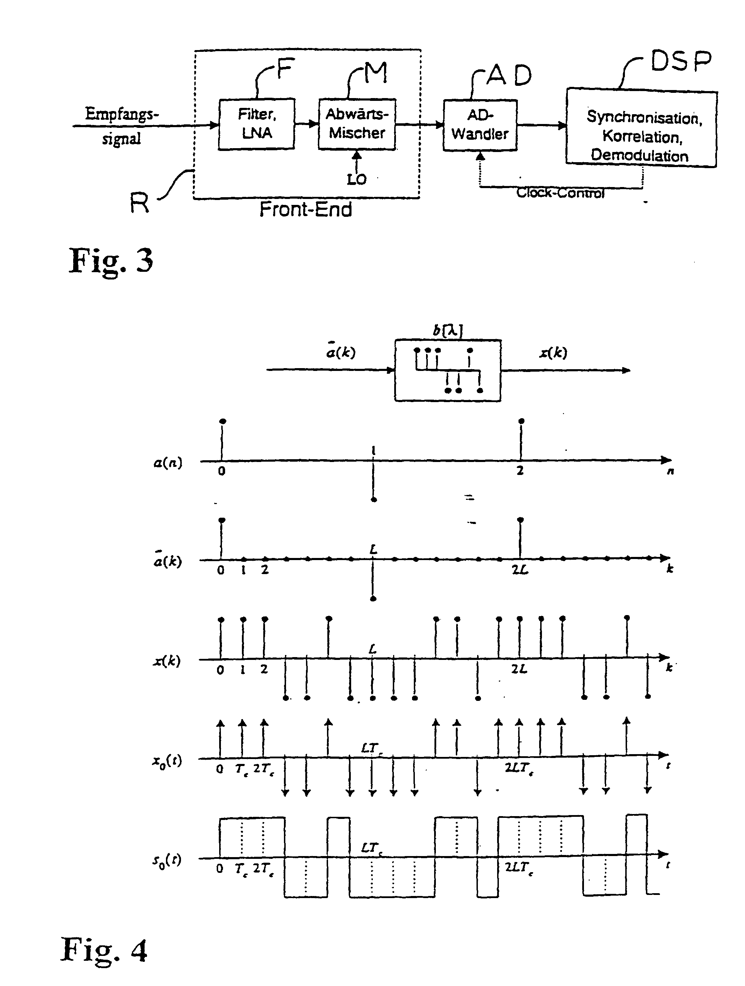

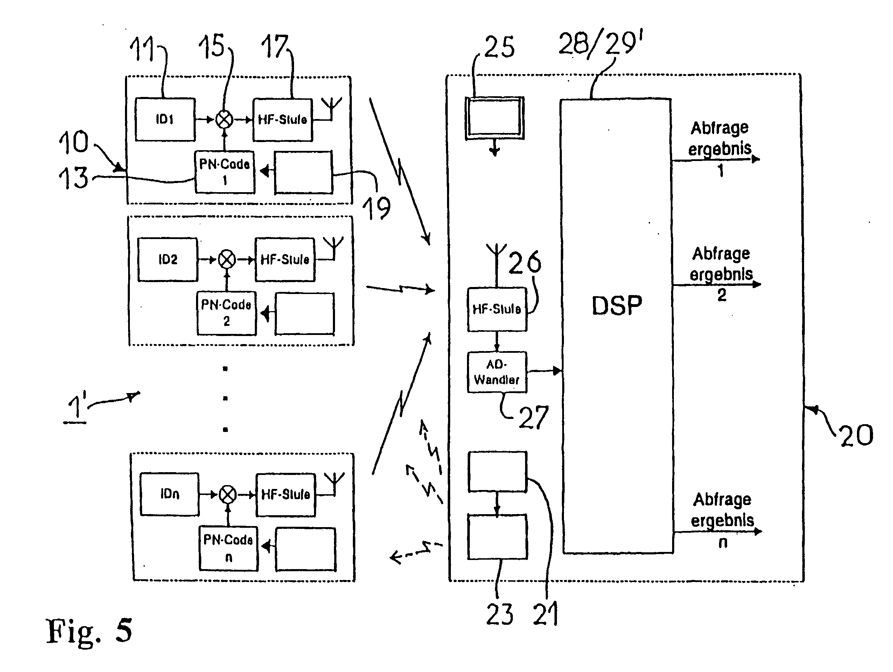

Die Fahrzeugeinheit 20 umfaßt einen Abfragesignalgenerator 21 und einen mit dessen Ausgang verbundenen Abfragesignalsender 23 zur Erzeugung des Abfragesignals. Bestehende Systeme benutzen für dieses Abfragesignal relativ niedrige Frequenzen (z.B. 125 kHz, induktive Übertragung), um eine genaue Eingrenzung des Wirkungsbereichs des Abfragesignals zu erreichen, das Signal wird durch (hier nicht gezeigte) Antennen in Karosserieteilen eines Fahrzeugs übertragen. Prinzipiell ist jedoch jede beliebige Übertragungsstrecke für dieses Abfragesignal denkbar. Auch insoweit ist die Funktion der Zugangssteueranordnung 1 an sich bekannt und bedarf keiner genaueren Erläuterung. Wesentlich ist, daß durch einen Mikrocontroller 25 der Fahrzeugeinheit 20 bei Erhalt eines entsprechenden Auslösesignals (beispielsweise von einem Taster am Türgriff des Fahrzeugs) die Erzeugung eines einzelnen, allgemeingültigen Abfragesignals für alle ID-Geber 10 durch den Abfragesignalgenerator 21 veranlaßt und zugleich eine Parallelverarbeitung der daraufhin eingehenden Antwortsignale der ID-Geber gesteuert wird. Die Antwortsignale werden wiederum in an sich bekannter Weise über eine (nicht bezeichnete) HF-Antenne empfangen, in einer HF-Stufe 26 HF-seitig verarbeitet und einem der HF-Stufe nachgeschalteten A/D-Wandler 27 digitalisiert. Im Anschluß an die Digitalisierung erfolgt - wie in der Figur zu erkennen ist - eine Parallelverarbeitung in einer der Anzahl n der zugelassenen ID-Geber 10 entsprechenden Anzahl von Korrelatorstufen 28, wo jeweils eine Entspreizung mit dem bei der senderseitigen Spreizung angewandten, in der Fahrzeugeinheit in einem fahrzeugseitigen Spreizcodespeicher 29 abgelegten Spreizcode erfolgt. Dieser Vorgang ist nochmals in Fig. 3 und weiter unten in der Beschreibung skizziert. In dessen Ergebnis stehen die in Fig. 1 als "Abfrageergebnis 1", "Abfrageergebnis 2" bzw. "Abfrageergebnis n" bezeichneten entspreizten Zugangs- und Nutzercodes ID1, ID2 bzw. IDn der im Abfragebereich der Fahrzeugeinheit 20 liegenden und ein Antwortsignal übermittelnden ID-Geber zur weiteren Verarbeitung und Prüfung in an sich bekannter Weise bereit, wobei die Bereitstellung erfindungsgemäß gleichzeitig erfolgt und dadurch die Zugangscode-Verarbeitung beschleunigt wird. Das in Fig. 1 dargestellte Verfahren der digitalen Signalverarbeitung (DSP) stellt das grundlegende Prinzip der bevorzugten Ausführung dar. Der DSP-Algorithmus läßt sich im Rahmen der Rechenkapazität modifizieren, um applikationsspezifische Optimierungen vorzunehmen. Beispielsweise ließe sich der Dynamikbereich durch Verfahren wie "Multiuser Detection of CDMA by Iterated Soft-Cancellation (Turbo Multiuser Detection)" erweitern. In der einschlägigen Literatur finden sich viele Ansätze für solche Optimierungs-Möglichkeiten.
Die digitale Signalverarbeitung läßt sich in diesem Fall im allgemeinen nicht mehr in einzelne unabhängige Zweige Aufteilen. Die in Fig. 1 skizzierte Anordnung hätte dann die in Fig. 5 gezeigte Form einer modifizierten Anordnung 1' mit einem DSP-Verarbeitungsblock 28/29' zur parallelen digitalen Verarbeitung des Empfangssignals. Fig. 5 bedarf in Anbetracht der obigen Erläuterung von Fig. 1 keines weiteren Kommentars.

Fig. 2 illustriert die einzelnen Stufen der Erzeugung eines gespreizten Datensignals (Zugangs- und Nutzercode), die in vorteilhafter Weise im logischen bzw. digitalen Verarbeitungsbereich der ID- bzw. Zugangscodegeber 10 stattfindet. Zunächst wird mittels eines rückgekoppelten Schieberegisters SR und einer Additionsstufe ADD auf im oberen Teil von Fig. 2 skizzierte Weise aus einem Taktsignal "Clock" ein Spreizcode "PN-Signal" erzeugt. Anschließend erfolgt eine multiplikative Verknüpfung des hierbei erhaltenen Spreizcodes mit dem eigentlichen Datensignal in der bereits in Fig. 1 gezeigten Verarbeitungsstufe 15. Der Signalverlauf des Datensignals, des Spreizcodes und des gespreizten Datensignals ist - an einem vereinfachten Beispiel - in den drei Timingdiagrammen im mittleren Bereich von Fig. 2 dargestellt.

Im unteren Bereich der Fig. 2 ist der letzte Schritt einer BPSK-Modulation eines HF-Trägers mit dem im Mikrocontroller MC gewonnenen gespreizten Datensignal in einem BPSK-Modulator MOD zur Gewinnung eines Sendesignals dargestellt.

In Fig. 3 ist (wiederum in Form einer Prinzipskizze) dargestellt, wie das Empfangssignal der Fahrzeugeinheit 20 (Fig. 1) in einem einfachen Empfangsteil ("Front-End") R einer Filterung in einer Filterstufe F und einer weiteren Verarbeitung in einem dieser nachgeordneten Abwärts-Mischer M unterzogen wird, bevor das Signal in einem A/D-Wandler AD (entsprechend Block 27 in Fig. 1) einer Digitalisierung unterzogen und in der logischen Verarbeitungsstufe DSP, die zugleich das Abtastsignal für den A/D-Wandler AD liefert, einer logischen Verarbeitung unter Synchronisation, Korrelation und Demodulation zur Rückgewinnung des Zugangs- und Nutzercodes unterzogen wird.

In Fig. 4 ist an einem Beispiel eine Spreizcode-Verarbeitung etwas näher skizziert, wie sie bei der hier erläuterten Zugangssteueranordnung 1 senderseitig in den Verarbeitungsstufen 15 der ID-Geber 10 ausgeführt wird und der empfängerseitig eine entsprechende Entspreizung in den Korrelatorstufen 29 der Fahrzeugeinheit 20 entspricht.

Vereinfachend wird angenommen, daß der zu übertragende Zugangscode durch ein Folge a(n) von Bits gegeben sei, die einen zeitlichen Abstand bzw. eine Symboldauer T haben. Weiter wird angenommen, daß diese Symboldauer T gleich dem zeitlichen Abstand T_{b} zweier Quellensymbole sei und a(n) aus bipolaren Werten +1, -1 gebildet sei, die mit gleicher Wahrscheinlichkeit auftreten sollen. Der Spreizvorgang umfaßt in der Modell-Darstellung folgende Schritt: Zunächst wird durch Aufwärtstastung mit dem Spreizfaktor L die Folge ä(k) erzeugt. Dies geschieht durch Einfügen von (L-1) Nullen im Abstand der Chipdauer T_{c} zwischen jeweils zwei Werten von a(n). Die Zuordnung der Spreizsequenz zu den einzelne Bits wird in diesem Modell als Filterung der aufwärtsgetasteten Bitfolge ä(k) mit einem FIR-Filter verstanden. Die Filterkoeffizienten dieses FIR-Filters sind die L bipolaren Elemente der (im Kasten in der ersten Zeile der Fig. 4 gezeigten) Spreizsequenz b. Die bei der Spreizung entstehende Folge x(k) ist nun durch die Spreizsequenz geprägt. Ein D/A-Wandler wandelt die Folge x(k) in eine Folge x₀(t) von Diracimpulsen im zeitlichen Abstand T_{c}, und darauf folgt eine Impulsformung mit einer frei wählbaren Impulsform zu einem Sendesignal s₀(t), das sich mathematisch als Ergebnis einer Faltung von x₀(t) und der inversen Fouriertransformierten des Frequenzganges bei der Impulsformung darstellt. (Dieses Modell schließt in vereinfachender Weise der Darstellung keine Modulation auf eine Trägerfrequenz ein.)

Die Ausführung der Erfindung ist nicht auf das beschriebene Beispiel und die gegebenen Erläuterungen beschränkt, sondern ebenso in einer Vielzahl von Abwandlungen möglich.

## Patentansprüche

1. Verfahren zur Fern-Zugangssteuerung, insbesondere zur Funk-Zugangssteuerung zum Innenraum und/oder zur Aktivierung von Betriebsfunktionen eines Kraftfahrzeuges, mittels einer Anordnung (1) mit einer Sender-/Empfänger-Einheit (20) zur Aussendung eines Abfragesignals und zum Empfang von Zugangscodesignalen und einer mit der Sender-/Empfänger-Einheit verbundenen Auswertungseinheit zur Auswertung empfangener Zugangscodesignale und zur Ausgabe eines Zugangsfreigabe- oder - sperrsignals in Abhängigkeit vom Auswertungsergebnis und einer Mehrzahl von Zugangscodegebern (10) zum Empfang des Abfragesignals und zur Aussendung jeweils eines spezifischen Zugangscodesignals in Reaktion auf den Empfang des Abfragesignals,
**dadurch gekennzeichnet, daß**
durch die Sender-/Empfänger-Einheit ein alle Zugangscodegeber gleichzeitig aktivierendes Abfragesignal ausgegeben wird und alle dieses Abfragesignal empfangenden Zugangscodegeber danach gleichzeitig ihre spezifischen Zugangscodesignale aussenden, wobei die Sender-/Empfänger-Einheit eine Separierung der gleichzeitig empfangenen Zugangscodesignale aufgrund von diesen aufgeprägten spezifischen Spreizsequenzen ausführt.

2. Verfahren nach Anspruch 1,
**dadurch gekennzeichnet, daß**
die Zugangscodesignale in den Zugangscodegebern (10) mit unterschiedlichen Spreizsequenzen einer Spreizspektrum-Verarbeitung unterzogen und in der Sender-/Empfänger-Einheit (20) mit jeweils einer entsprechenden inversen Spreizsequenz entspreizt werden.

3. Verfahren nach Anspruch 1 oder 2,
**dadurch gekennzeichnet, daß**
für die Spreizspektrum-Verarbeitung in den Zugangscodegebern (10) das DSSS-Verfahren, insbesondere unter Nutzung zueinander orthogonaler Spreizsequenzen als Charakteristikum, und in der Sender-/Empfänger-Einheit (20) eine Entspreizung im Basisband durch digitale Signalverarbeitung angewandt wird.

4. Verfahren nach Anspruch 2,
**dadurch gekennzeichnet, daß**
für die Spreizspektrum-Verarbeitung in den Zugangscodegebern (10) eine Chirpsequenz- oder Frequency-Hopping-Verarbeitung und in der Sender-/Empfänger-Einheit eine entsprechende laufzeitabhängige Filterung im HF-Abschnitt bzw. Frequency-Hopping-Entspreizung angewandt wird.

5. Anordnung zur Durchführung des Verfahrens nach einem der vorangehenden Ansprüche, welche aufweist:
eine Sender-/Empfänger-Einheit (20) mit einem Abfragesignalgeber (21, 23) zur Erzeugung und Aussendung eines Abfragesignals und einem Empfänger (26 bis 29) zum Empfang von Zugangscodesignalen, wobei mindestens in einem Abschnitt des Empfängers Mittel (28, 29) zur parallelen Verarbeitung mehrerer empfangener Zugangscodesignale gemäß diesen aufgeprägten spezifischen Spreizsequenzen vorgesehen sind, und
eine Mehrzahl von Zugangscodegebern (10) mit einer Empfangsund Aktivierungseinheit (19) zum Empfang des Abfragesignals und zur Steuerung der Ausgabe des jeweiligen Zugangscodesignals, einem Speicherbereich (13) zur Speicherung von dem Zugangscode aufzuprägenden spezifischen Spreizsequenzen und einer Sendestufe (17), die eine Verarbeitungseinheit (15) zur Aufprägung der gespeicherten spezifischen Spreizsequenzen auf den Zugangscode aufweist.

6. Anordnung nach Anspruch 5,
**dadurch gekennzeichnet, daß**
der Abfragesignalgeber (21, 23) der Sender-/Empfänger-Einheit (20) und die Empfangs- und Aktivierungseinheiten (19) der Zugangscodegeber (10) zur induktiven Signalübertragung, inbesondere bei einer Trägerfrequenz von 125 kHz, ausgebildet sind.

7. Anordnung nach Anspruch 5 oder 6,
**dadurch gekennzeichnet, daß**
der Empfänger (26 bis 29) der Sender-/Empfänger-Einheit und die Sendestufen (17) der Zugangscodegeber Mittel zu einer UHF-Funkübertragung, insbesondere bei 433 oder 868 MHz, aufweisen.

8. Anordnung nach einem der Ansprüche 5 bis 7,
**dadurch gekennzeichnet, daß**
der Empfänger (26 bis 29) der Sender-/Empfänger-Einheit Abschnitte (28) zur parallelen Verarbeitung verschiedener Zugangscodesignale im Basisband, insbesondere Mittel zur Direct-Sequence-Spreizung eines entsprechend gespreizten Zugangscodesignals, aufweist.

9. Anordnung nach einem der Ansprüche 5 bis 7,
**dadurch gekennzeichnet, daß**
der Empfänger der Sender-/Empfänger-Einheit Abschnitte zur parallelen Verarbeitung verschiedener Zugangscodesignale in der HF-Stufe, insbesondere zeitvariante Filterkomponenten zur Entspreizung von Chirp-gespreizten Zugangscodesignalen, aufweist.

## Claims

1. Method for remote access control, in particular for radio access control to the interior and/or for activation of operating functions of a motor vehicle, by means of an arrangement (1) comprising a transceiver unit (20) for transmitting an interrogation signal and for receiving access code signals, an evaluation unit, which is connected to the transceiver unit, for evaluating received access code signals and for outputting an access enable or inhibit signal as a function of the evaluation result, and a plurality of access code transmitters (10) for receiving the interrogation signal and transmitting in each case a specific access code signal in response to receiving the interrogation signal,
**characterised in that** an interrogation signal simultaneously activating all the access code transmitters is output by the transceiver unit and all the access code transmitters receiving the interrogation signal then simultaneously transmit their specific access code signals, the transceiver unit performing a separation of the simultaneously received access code signals on the basis of specific spreading sequences impressed on them.

2. Method according to Claim 1,
**characterised in that** the access code signals undergo spread spectrum processing using different spreading sequences in the access code transmitters (10) and are despread in the transceiver unit (20) using a corresponding inverse spreading sequence in each case.

3. Method according to Claim 1 or 2
**characterised in that** the DSSS process is used for spread spectrum processing in the access code transmitters (10), in particular using mutually orthogonal spreading sequences as the characteristic, and despreading in the baseband by means of digital signal processing is employed in the transceiver unit (20).

4. Method according to Claim 2,
**characterised in that** chirp sequence or frequency-hopping processing is used for spread spectrum processing in the access code transmitters (10), and corresponding delay-dependent filtering in the RF section or frequency-hopping despreading is employed in the transceiver unit.

5. Arrangement for implementing the method according to one of the preceding Claims, comprising:
a transceiver unit (20) having an interrogation signal transmitter (21, 23) for generating and transmitting an interrogation signal, and a receiver (26 to 29) for receiving access code signals, with means (28, 29) for parallel processing of a plurality of received access code signals in accordance with said specific spreading sequences impressed on them being provided at least in one section of the receiver, and
a plurality of access code transmitters (10) having a receive and activation unit (19) for receiving the interrogation signal and for controlling the outputting of the relevant access code signal, a memory area (13) for storing specific spreading sequences to be impressed on the access code, and a transmission stage (17) having a processing unit (15) for impressing the specific spreading sequences on the access code.

6. Arrangement according to Claim 5,
**characterised in that** the interrogation signal transmitter (21, 23) of the transceiver unit (20) and the receive and activation units (19) of the access code transmitters (10) are designed for inductive signal transmission, in particular at a carrier frequency of 125 kHz.

7. Arrangement according to Claim 5 or 6,
**characterised in that** the receiver (26 to 29) of the transceiver unit, and the transmission stages (17) of the access code transmitters have means of UHF radio transmission, in particular at 433 or 868 MHz.

8. Arrangement according to one of Claims 5 to 7,
**characterised in that** the receiver (26 to 29) of the transceiver unit has sections (28) for parallel processing of different access code signals in the baseband, in particular means of direct sequence spreading of an appropriately spread access code signal.

9. Arrangement according to one of Claims 5 to 7,
**characterised in that** the receiver of the transceiver unit has sections for parallel processing of different access code signals in the RF stage, in particular time-variant filter components for despreading chirp-spread access code signals.

## Revendications

1. Procédé pour la commande d'accès à distance, en particulier pour la commande d'accès par radiocommande, à l'intérieur et/ou pour l'activation des fonctions opérationnelles d'un véhicule automobile à l'aide d'un dispositif (1) avec une unité d'émission/réception (20) pour l'envoi d'un signal d'interrogation et pour la réception de signaux de code d'accès et une unité d'analyse reliée à l'unité d'émission/réception pour l'analyse de signaux de code d'accès reçus et pour la sortie d'un signal d'autorisation d'accès ou de verrouillage d'accès en fonction du résultat de l'analyse et une pluralité de transmetteurs de code d'accès (10) pour la réception du signal d'interrogation et pour l'envoi d'un signal de code d'accès spécifique en réaction à la réception du signal d'interrogation,
**caractérisé en ce qu'**un signal d'interrogation activant simultanément tous les transmetteurs de code d'accès par l'intermédiaire de l'unité d'émission/réception est émis et tous les transmetteurs de code d'accès recevant ce signal d'interrogation envoient ensuite simultanément leurs signaux de code d'accès spécifiques, l'unité d'émission/réception effectuant une séparation des signaux de code d'accès reçus simultanément d'après des séquences d'étalement spécifiques marquées.

2. Procédé selon la revendication 1,
**caractérisé en ce que** les signaux de code d'accès dans les transmetteurs de code d'accès (10) avec des séquences d'étalement différentes sont soumis à un traitement d'étalement du spectre et sont dé-étalés dans l'unité d'émission/réception (20) avec chacun une séquence d'étalement inverse appropriée.

3. Procédé selon la revendication 1 ou 2,
**caractérisé en ce que**, pour le traitement d'étalement du spectre, le procédé DSSS, en particulier lorsque l'on utilise des séquences d'étalement orthogonales les unes par rapport aux autres, est utilisé comme caractéristique dans les transmetteurs de code d'accès (10), et un dé-étalement est utilisé dans la bande de base à l'aide du traitement du signal numérique est utilisé dans l'unité d'émission/réception (20).

4. Procédé selon la revendication 2,
**caractérisé en ce que**, pour le traitement d'étalement du spectre, on utilise un traitement "chirp sequence" ou "frequency hopping" dans les transmetteurs de code d'accès (10) et un filtrage approprié dépendant du temps de transit dans la portion HF ou dans le dé-étalement "frequency hopping", dans l'unité d'émission/réception (20).

5. Dispositif pour la mise en oeuvre du procédé selon l'une quelconque des revendications précédentes, qui comporte :
une unité d'émission/réception (20) avec un émetteur de signal d'interrogation (21, 23) pour la génération et l'envoi d'un signal d'interrogation et un récepteur (26 à 29) pour la réception de signaux de code d'accès, moyennant quoi, au moins dans une portion du récepteur, des moyens (28, 29) sont prévus pour le traitement parallèle de plusieurs signaux de code d'accès reçus selon ces séquences d'étalement spécifiques marquées, et
une pluralité de transmetteurs de code d'accès (10) avec une unité de réception et d'activation (19) pour la réception du signal d'interrogation et pour la commande de la sortie du signal de code d'accès correspondant, une zone de mémoire (13) pour la mémorisation des séquences d'étalement spécifiques à marquer sur le code d'accès et un étage d'émission (17) qui comporte une unité de traitement (15) pour le marquage des séquences d'étalement spécifiques mémorisées sur le code d'accès.

6. Dispositif selon la revendication 5,
**caractérisé en ce que** l'émetteur de signal d'interrogation (21, 23) de l'unité d'émission/réception (20) et les unités de réception et d'activation (19) des transmetteurs de code d'accès (10) sont conçus pour la transmission de signal inductive, en particulier à une fréquence d'onde porteuse de 125 kHz.

7. Dispositif selon la revendication 5 ou 6,
**caractérisé en ce que** le récepteur (26 à 29) de l'unité d'émission/réception et les étages d'émission (17) des transmetteurs de code d'accès comportent des moyens pour une transmission par radio UHF, en particulier à 433 MHz ou 868 MHz.

8. Dispositif selon l'une quelconque des revendications 5 à 7,
**caractérisé en ce que** le récepteur (26 à 29) de l'unité d'émission/réception comporte des portions (28) pour le traitement parallèle de signaux de code d'accès différents dans la bande de base, en particulier des moyens pour l'étalement à séquence directe d'un signal de code d'accès étalé de manière appropriée.

9. Dispositif selon l'une quelconque des revendications 5 à 7,
**caractérisé en ce que** le récepteur de l'unité d'émission/réception comporte des portions pour le traitement parallèle de signaux de code d'accès différents dans l'étage HF, en particulier des composants de filtre variables en temps pour le dé-étalement de signaux de code d'accès étalés par "chirp".
